# EUROPÄISCHE PATENTSCHRIFT

(11) **EP 0 588 455 B1**
(45) Veröffentlichungstag und Bekanntmachung des Hinweises auf die Patenterteilung: **26.03.1997**
(21) Anmeldenummer: 93250232.1
(22) Anmeldetag: 25.08.1993
(51) Int. Cl.: B61B 13/00, B61F 9/00, B62D 1/26, E01B 25/28

(54) **Fördersystem mit einem an Leitschienen geführten Flurförderzeug**
Conveyor system with an industrial truck guided by guide rails
Système de transport avec un chariot de manutention guidé par rails de guidage

(30) Priorität: 17.09.1992 DE 4231595
(43) Veröffentlichungstag der Anmeldung: 23.03.1994
(73) Patentinhaber: MANNESMANN Aktiengesellschaft, 40213 Düsseldorf (DE)
(72) Erfinder: Becker, Klaus, Dr.-Ing., D-58300 Wetter (DE); Ostholt, Rüdiger, D-58300 Wetter (DE)
(74) Vertreter: Meissner, Peter E., Dipl.-Ing.

(56) Entgegenhaltungen:
- EP-A- 0 116 021
- WO-A-92/05056
- DE-A- 2 733 373
- FR-A- 2 217 200
- FR-A- 2 234 170
- GB-A- 1 354 888
- US-A- 3 759 187

## Beschreibung

Die Erfindung betrifft ein Fördersystem mit einem an Leitschienen geführten Flurförderzeug gemäß dem Oberbegriff des Anspruches 1.

### Einschubseite 1a

Ein derartiges Fördersystem mit einem an Leitschienen geführten Fahrzeug ist aus der französischen Patentanmeldung FR 2 234 170 bekannt. Das Fahrzeug weist mindestens zwei in Drehschemeln um vertikale Achsen schwenkbar gelagerte Tragachsen auf, die mit luftbereiften Rädern versehen sind. Je Tragachse sind zur Führung bzw. Lenkung der Räder vier Paare von Führungsrollen vorgesehen, die über einen Rahmen auf die Tragachse einwirken und in einer Leitschiene geführt sind. Jedes Paar Führungsrollen besteht aus einer ortsfest an dem Rahmen drehbar gelagerten Führungsrolle und einer schwenkbaren Führungsrolle, um je nach gewählter Fahrtrichtung in die in Fahrrichtung gesehen die rechte oder linke Leitschiene zu umgreifen.

Dieses Fördersystem mit einem an Leitschienen geführten Fahrzeug weist zwar Abzweigungen auf, die aus ortsfest angeordneten Leitschienen gebildet sind und an dem Fahrzeug angeordnete schwenkbare Führungsrollen zum Wechseln der Fahrtrichtung in der Abzweigung, jedoch ist die Verwendung von vier Paaren von Führungsrollen je Tragachse konstruktiv sehr aufwendig.

Aus der DE 22 58 144 B2 ist eine Weiche für auf Fahrbahnen geführte Fahrzeuge bekannt. An den Längsseiten der Fahrzeuge sind Führungsrollenpaare angeordnet, die im Eingriff mit Führungswänden stehen, die die Fahrbahn seitlich begrenzen. Im Bereich von Abzweigungen von der Fahrbahn sind Weichen angeordnet. Die Weichen bestehen im wesentlichen aus einer horizontal schwenkbaren Führungsschiene, die im Verlauf der Führungswand auf der der von der Hauptspur abzweigenden Fahrspur abgewandten Seite angeordnet ist. Diese Führungsschiene führt im Bereich der Weiche das Fahrzeug ausschließlich, so daß je nach Schwenkstellung dieser Führungsschiene das Fahrzeug geradeaus in die Hauptspur oder in die abzweigende Fahrspur geleitet wird.

Derartige Weichen mit aktiv schwenkbaren Führungsschienen erweisen sich als nachteilig, da zusätzlich zu der konstruktiv aufwendigen Bauweise, sowie dem im Betrieb erforderlichen Wartungsaufwand die maximal erreichbare Förderleistung begrenzt ist. Diese Begrenzung wird bedingt durch die erforderliche Zeit für die Umschaltung der Führungsschiene. Darüber hinaus kann es zu Störungen im Betrieb kommen, wenn ein Fahrzeug während des Umschaltvorganges der Führungsschiene in diese einfährt, da in diesem Fall an den Übergängen zwischen der Führungswand und der Führungsschiene bzw. umgekehrt eine einwandfreie Führung nicht gewährleistet ist.

Des weiteren ist aus der DE 24 11 686 C3 eine Rad-Schienenanordnung für Schienenfahrzeuge mit auf Fahrschienen verfahrbaren, spurkranzlosen Tragrädern bekannt. Das Schienenfahrzeug ist über Führungsräder beidseitig an der Fahrschiene geführt und weist zusätzlich Richtungswahlräder auf, die im Bereich von Abzweigungen in dort angeordnete Leitschienen der gewünschten Fahrtrichtung eingreifen können.

Dieses Schienenfahrzeug weist zwar an dem Fahrzeug angeordnete Richtungswahlräder auf, jedoch dienen diese ausschließlich der Wahl der Spur im Bereich der Abzweigung und nicht der Führung des Fahrzeuges an der Fahrschiene. Außerdem erweist es sich als nachteilig, daß die Führungsräder des Fahrzeuges im Bereich der Abzweigung beim Übergang der Führung von der Fahrschiene auf die Leitschienen eine Richtungsumkehr erfahren und hierdurch die Räder infolge der auftretenden Reibungs beanspruchung eine geringere Lebensdauer erzielen. Ferner sind im Bereich der Abzweigungen Durchbrechungen an der Fahrschiene erforderlich.

Der Erfindung liegt die Aufgabe zugrunde, ein Fördersystem mit einem an Leitschienen geführten Flurförderzeug zu schaffen, das in Bezug auf dessen Führungsrollen eine konstruktiv vereinfachte Bauweise bei gleichzeitig guten Führungseigenschaften des Flurförderzeuges in Kurven und Weichen aufweist.

Diese Aufgabe wird bei einem gattungsgemäßen Fördersystem durch die Merkmale des kennzeichnenden Teils des Anspruches 1 gelöst. Vorteilhafte Ausgestaltungen sind in den Unteransprüchen 2 bis 12 angegeben.

Erfindungsgemäß wird durch die Anordnung der Umschaltmittel zum Wechseln des Fahrweges direkt an dem Fahrzeug der Vorteil erzielt, daß die Installation der Leitschienen auf dem Hallenflur und die konstruktive Ausbildung der Leitschienen im Bereich der Abzweigungen einfacher wird, da die Leitschienen ortsfest und ohne bewegliche Teile ausgebildet werden können. Außerdem ist eine durchgehende Ausbildung der Leitschienen im Bereich der Abzweigungen möglich.

Des weiteren wird durch die Koppelung der schwenkbaren äußeren Führungsrollen über ein Gestänge, wodurch sich nur eine der beiden gegentiberliegenden Führungsrollen in der Führungsstellung befinden kann, gewährleistet, daß im Bereich der Abzweigungen, in denen für einen kurzen Bereich beidseitig des Fahrweges Leitschienen angeordnet sind, ein Hängenbleiben des Fahrzeuges an den auseinander laufenden Leitschienen vermieden wird. Durch die Anordnung eines Sicherungsbleches an dem Fahrzeug, das in den Raum zwischen der Leitschiene und dem Fahrweg hineinragt und dessen Abstand von dem horizontalen Schenkel der L-förmigen Leitschiene geringer ist als die Höhe des vertikalen Schenkels der Leitschiene, wird erreicht, daß die Führungsrollen auch beim Überfahren eines Hindernisses durch das Fahrzeug nicht die Leitschiene verlassen können, da in diesem Fall das Sicherungsblech von unten an die Leitschiene anschlägt.

Außerdem ist in den Bereichen des Leitschienesystems, in denen das Fahrzeug durch eine Fehlschaltung der schwenkbaren Führungsrollen den Förderweg verlassen könnte, durch die Anordnung eines Anschlagelements an den Leitschienen gewährleistet, daß über ein Mitnehmerelement an dem Fahrzeug die Führungsrollen umgeschaltet werden und anschließend das Fahrzeug stillgesetzt wird. Als konstruktiv besonders einfache Lösung erweist sich die Ausbildung des Anschlagelementes als Haken, der im Falle der Fehlschaltung das als Ring ausgebildete Mitnehmerelement betätigt, wobei der Ring über ein Zugmittel mit dem Gestänge der äußeren Führungsrollen verbunden ist.

Des weiteren stellt sich die nach innen versetzte Anordnung der Trag-und Lenkräder als besonders vorteilhaft heraus, da hierdurch in den Kurvenbereichen ein Überfahren der Leitschiene durch den Grundrahmen des Fahrzeuges ermöglicht wird und somit verhältnismäßig enge Kurvenradien durchfahren werden können. Die Anordnung eines Antriebsrades zwischen den beiden hinteren Tragrädern, dessen Achse in Fahrstellung in einer vertikalen Ebene mit den Achsen der Tragräder angeordnet ist, bietet den Vorteil, daß die Seitenführungskräfte von den Tragrädern übernommen werden und somit das mittig zwischen den Tragrädern angeordnete Antriebsrad im wesentlichen nur Vortriebskräfte liefert. Hierdurch verfügt das Fahrzeug über eine gute Spurstabilität, die einen Betrieb des Fahrzeuges auch bei schlechter Traktion begünstigt.

Nachfolgend wird die Erfindung anhand des in den Figuren dargestellten Ausführungsbeispiels näher erläutert. Es zeigen:
- Figur 1: eine Draufsicht auf das Fördersystem mit einem über eine Leitschiene geführtem Fahrzeug und einem angrenzenden Zuführförderer
- Figur 2: eine Draufsicht auf das Fahrzeug,
- Figur 3: eine Draufsicht auf das Fahrzeug bei entfernten Aufbauten,
- Figur 4: eine Seitenansicht von Figur 3,
- Figur 5: eine Vorderansicht von Figur 3,
- Figur 6: einen vergrößerten Ausschnitt von Figur 5 aus dem Bereich der Leitschiene.

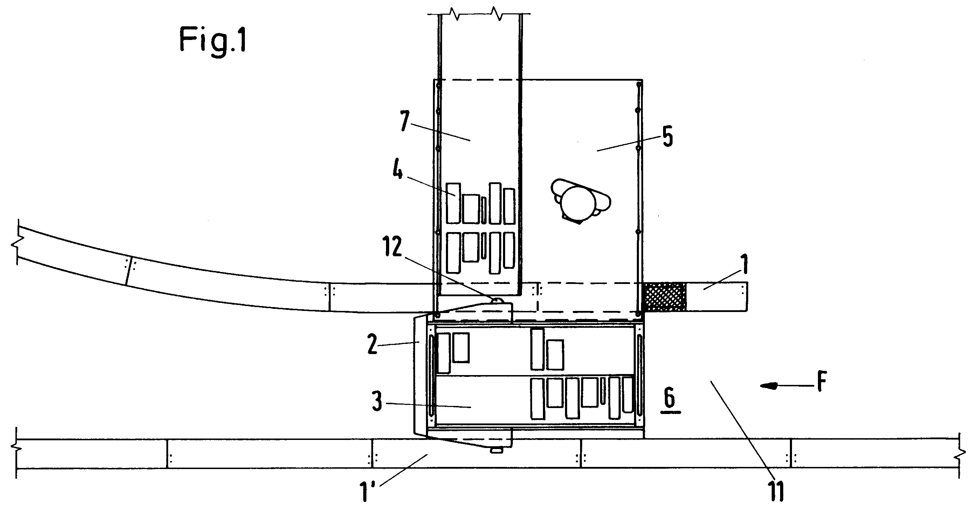

Die Figur 1 zeigt eine Draufsicht eines erfindungsgemäßen Fördersystems mit einem Fahrzeug 2, das mit Führungsrollen 12 an einer auf dem Flur 11 angeordneten Leitschiene 1 geführt ist. Auf der dieser Leitschiene 1 gegenüberliegenden Seite des Fahrweges 6 für das Fahrzeug 2 ist im Bereich von Abzweigungen eine weitere Leitschiene 1' angeordnet. Durch Umschalten der Führungsrollen 12 von der Leitschiene 1 auf die weitere Leitschiene 1' kann das Fahrzeug 2 entlang der allseinanderlaufenden Leitschienen 1, 1' jeweils deren Verlauf folgen und somit die Fahrtrichtung wechseln. Des weiteren weist das auf dem Flur 11 verfahrbare Fahrzeug 2 eine jeweils von den Längsseiten leicht nach innen zur Mitte geneigte Plattform 3 auf. Die Plattform 3 dient zur Aufnahme von Fördergut 4 wie z.B. Koffer, Taschen oder dergleichen. Das Fahrzeug 2 befindet sich in einer Übergabestation 5 für die Gepäckstücke 4. In dieser Übergabestation 5 werden die Gepäckstücke 4 manuell von einem an den Förderweg 6 des Fahrzeugs 2 angrenzenden Zuführförderer 7, der als Gurtförderer ausgebildet und rechtwinklig zum Förderweg 6 ausgerichtet ist, auf die Plattform 3 geladen.

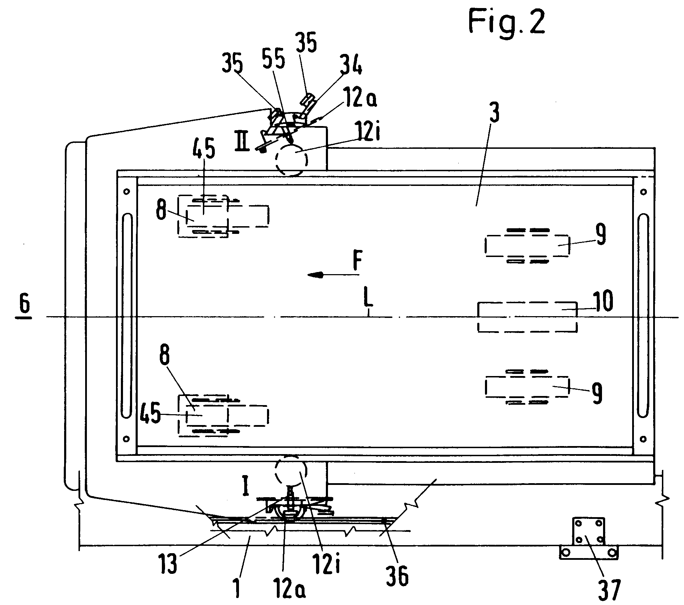

In Figur 2 ist eine Draufsicht auf das Fahrzeug 2, das in Fahrtrichtung gesehen links an einer Leitschiene 1 geführt ist, dargestellt. Das Fahrzeug 2 ist über fünf Räder 8, 9, 10 auf dem Flur 11 des Förderweges 6 verfahrbar. Hiervon sind zwei als Lenkräder 8 ausgebildet, die in Fahrtrichtung F gesehen vorne an dem Fahrzeug 2 angeordnet und um vertikale Achsen von Drehgelenken 45 jeweils von der zur Fahrtrichtung F parallelen Stellung ausgehend nach rechts und links um ca. 40° schwenkbar sind. Die Drehgelenke 45 sind an der Unterseite des Fahrzeuges 2 ist in Fahrtrichtung F gesehen vor den Achsen der Lenkräder 8 angeordnet. Zwei weitere der fünf Räder 8, 9, 10 sind als Tragräder 9 vorgesehen, die in Fahrtrichtung F gesehen hinten an dem Fahrzeug 2 angeordnet sind. Die Lenkräder 8 und die Tragräder 9 sind freilaufend und antriebslos. Zwischen den Tragrädern 9 ist ein Antriebsrad 10 angeordnet. Die Achse des Antriebsrades 10 ist in Fahrstellung in einer vertikalen Ebene mit den Achsen der Tragräder 9 angeordnet. Die Achsen der Räder 8, 9 und 10 sind etwa mit einem Abstand von einem Viertel der Fahrzeuglänge von der Vorder-bzw. Hinterkante des Fahrzeuges 2 angeordnet.

Das Fahrzeug 2 ist seitlich jeweils über ein Paar Führungsrollen 12 an der Leitschiene 1 führbar. Hierzu ragen die die Führungsrollen 12, von denen jeweils die äußeren als 12a und die inneren als 12i bezeichnet sind, seitlich über die rahmenförmige Kontur des Fahrzeuges 2 hinaus und umgreifen in einer Führungsstellung I die Leitschiene 1. In der Führungsstellung I sind die Führungsrollen 12 quer zur Längsrichtung L des Fahrzeugs 2 gesehen, in einer horizontalen Ebene unter Beibehaltung eines Spaltes 13 hintereinander angeordnet und um vertikale Achsen drehbar. Die innere Führungsrolle 12i istzwar innerhalb der Fahrzeugkontur gelagert, ragt jedoch seitlich nach außen aus dieser heraus.

Außerdem ist der Figur 2 zu entnehmen, daß die Führungsrollen 12 in Längsrichtung L gesehen zwischen den Lenkrädern 8 und den Tragrädern 9 angeordnet sind. Der Abstand der Führungsrollen 12 zu der Vorderkante des Fahrzeuges 2 beträgt etwa ein Drittel der Länge des Fahrzeuges 2.

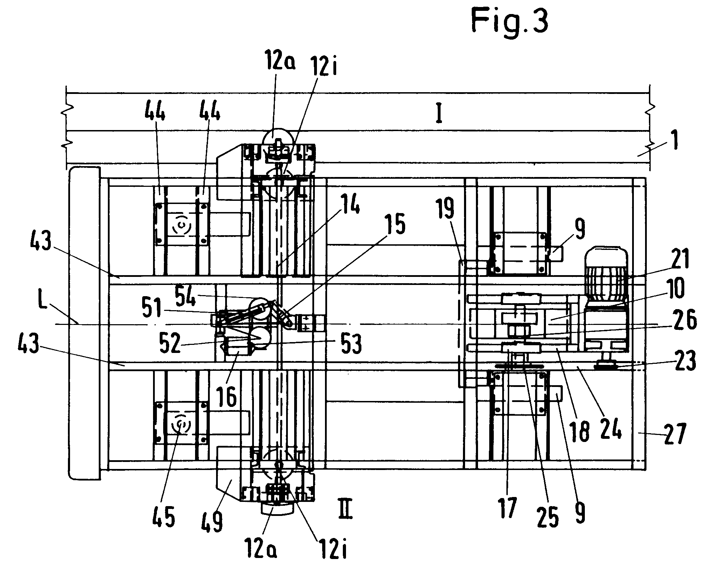

Die Figur 3 zeigt eine Draufsicht auf das Fahrzeug 2, wobei jedoch die Aufbauten entfernt sind. Dieses Fahrzeug 2 ist im Gegensatz zu Figur 2 an der in Fahrtrichtung F gesehen rechten Seite über das Paar Führungsrollen 12 an der Leitschiene 1 geführt. Die Führungsrollen 12 auf der linken Fahrzeugseite befinden sich in Offenstellung II, d.h. die äußere Führungsrolle 12a ist um eine horizontale und parallel zur Längsrichtung L des Fahrzeugs 2 gerichtete Achse über das Niveau der Oberkante der Leitschiene 1 hinaus nach oben verschwenkt. Die beiden äußeren Führungsrollen 12a sind über ein Gestänge 14 miteinander verbunden, so daß immer nur eine der beiden Führungsrollen 12a sich in der Führungsstellung I bzw. der Offenstellung II befinden kann. Das quer zur Längsrichtung L des Fahrzeuges 2 ausgerichtete Gestänge 14 ist in der Mitte des Fahrzeuges 2 mit einem schwenkbar gelagerten Hebel 15 verbunden. Der Hebel 15 weist an seinem freien Ende eine Ausnehmung für einen Mitnehmer 54 auf, durch den der Hebel 15 in seine beiden Endstellungen, die der Führungsstellung I und der Offenstellung II der Führungsrollen 12 entsprechen, bewegbar ist. Der Mitnehmer 54 ist hierzu an einer endlosen Kette 53 angeordnet, die über zwei Kettenumlenkräder 52 geführt ist. Eines der beiden Kettenräder 52 ist mit einem vorzugsweise als Elektromotor ausgebildeten Schwenkantrieb 16 verbunden. Zusätzlich ist an dem Hebel 15 ein Federelement 51 angeordnet, durch das dieser in Richtung seiner jeweiligen Endstellung beaufschlagt wird. Hierdurch ist es möglich, den Mitnehmer 54 nach erfolgter Schwenkbewegung des Hebels 15 aus dessen Ausnehmung herauszufahren und somit den Kettentrieb 16, 52, 53, 54 antriebsmäßig von dem Hebel 15 zu entkoppeln.

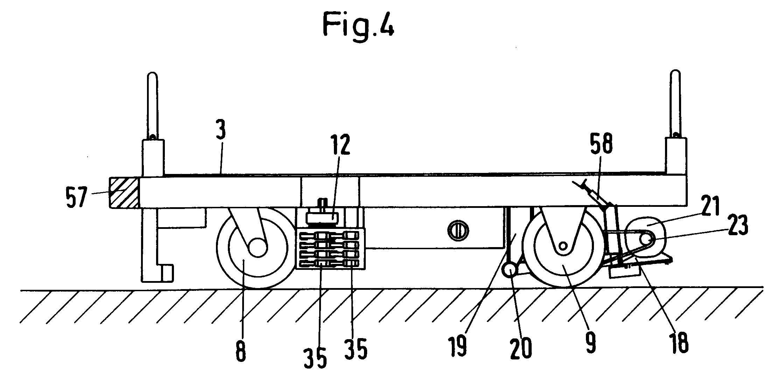

Des weiteren ist aus der Figur 3 und teilweise aus der Figur 4, die eine Seitenansicht der Figur 3 zeigt, ersichtlich, daß das Fahrzeug 2 im wesentlichen aus einem, die Außenkontur prägenden, rechteckigen Grundrahmen 27 besteht, der in der Mitte zwei in Längsrichtung L verlaufende Längsträger 43 aufweist, die im Bereich der Aufnahme der Räder 8, 9 über Querstreben 44 mit dem Grundrahmen 27 verbunden sind. Darüber hinaus ist im Bereich der Tragräder 9 zwischen den Längsseiten des Grundrahmens 27 ein weiterer Querträger 19 angeordnet, an dem über Achsen 20 ein Schwingenrahmen 18 gelagert ist. Die Achse 20 ist horizontal und quer zur Längsrichtung L ausgerichtet. Ausgehend von den Achsen 20 (s. Figur 4) ist in der Mitte des Schwingenrahmens 18 über Lagerböcke 17 und eine Antriebswelle 26 das Antriebsrad 10 gelagert. An dem den Achsen 20 abgewandten Ende des Schwingenrahmens 18 ist ein Fahrmotor 21 angeordnet. Das Antriebsrad 10 wird durch das Eigengewicht des Fahrmotors 21 in Richtung des Fahrweges beaufschlagt. Falls notwendig, ist grundsätzlich auch eine zusätzliche oder ausschließliche federnde Beaufschlagung des Antriebsrades 10 möglich. Der Fahrmotor 21 überträgt seine Antriebskräfte über ein auf seiner Abtriebsachse, die quer zur Längsrichtung L ausgerichtet ist, aufgeschobenes Kettenrad 23. Das Kettenrad 23 ist wiederum über eine Antriebskette 24 mit einem weiteren Kettenrad 25 verbunden, welches auf der Antriebswelle des Antriebsrads 10 befestigt ist. Der Fahrmotor ist insbesondere als langsam laufender Drehstrommotor ausgebildet, der ohne Getriebe, mit Ausnahme der Übersetzung von 1 : 2,5 des Kettengetriebes, auskommt. Des weiteren ist zwischen dem Rahmen des Fahrzeuges 2 und dem Schwingenrahmen 18 ein Dämpfer 58 vorgesehen. Ferner ist es möglich, den Schwingenrahmen 18 hochzuhebeln und über einen nicht dargestellten Bolzen an dem Grundrahmen 27 des Fahrzeuges 2 zu verriegeln und somit beispielsweise im Falle einer Betriebsstörung das Antriebsrad 10 von dem Fahrweg 6 abzuheben und das Fahrzeug 2 aus dem Fahrweg 6 zu schieben. In dieser Schwingenstellung ist es grundsätzlich auch möglich, das Fahrzeug 2 nach Art eines Anhängers von einem weiteren Fahrzeug ziehen zu lassen.

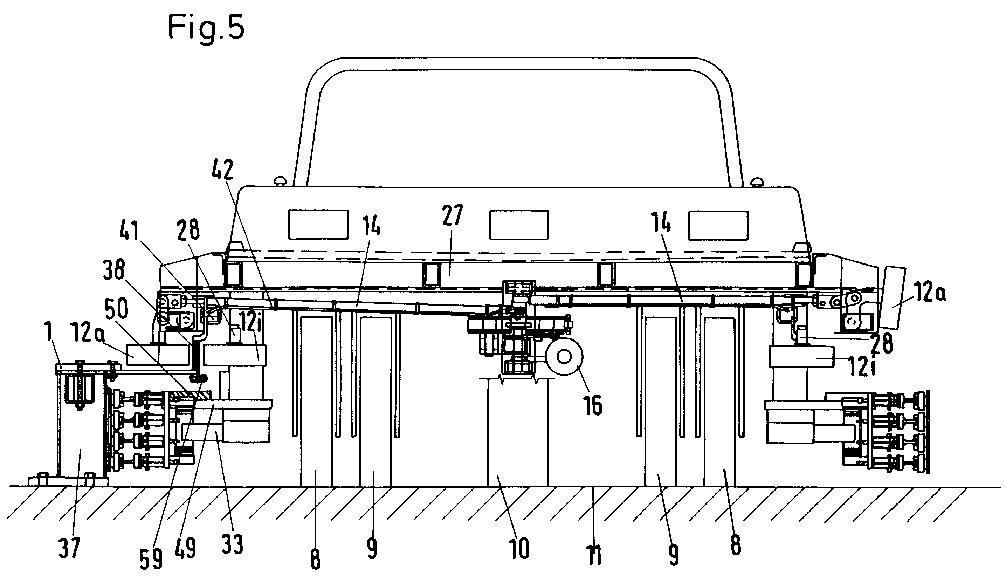

In Figur 5 ist eine Vorderansicht des Fahrzeuges 2 dargestellt. Aus dieser Figur ist deutlich die Anordnung der Räder 8, 9 und 10 zu entnehmen. Die Lenkräder 8 sind mit einem Abstand, der in etwa einem Sechstel der Breite des Fahrzeuges entspricht, von der Außenkontur des Fahrzeuges nach innen versetzt angeordnet. Die Tragräder 9 sind ebenfalls nach innen versetzt angeordnet, und zwar etwa um ein Viertel der Breite des Fahrzeuges. Die Lauf- und Tragräder 8, 9 sind als Vollgummiräder ausgebildet, die geeignet für den Flugfeldbetrieb sind. Das Antriebsrad 10 ist luftbereift und profiliert. Die Breite des Antriebsrades 10 ist breiter als die der Räder 8, 9 gewählt, um etwa vergleichbare Lebensdauern zu erzielen.

Ferner ist aus der Figur 5 ersichtlich, daß an der Unterseite des Fahrzeuges 2 unter den Führungsrollen 12 ein Sicherungsblech 49 mit einer Gleitauflage 50 angeordnet ist. Das Sicherungsblech 49 ist horizontal ausgerichtet und ragt vom Fahrzeug 2 aus gesehen unter den langen Schenkel der L-förmigen Leitschiene 1. Der Abstand zwischen der Oberfläche des Sicherungsbleches 49 und der Unterseite des langen Schenkels der Leitschiene 1 ist geringer als der Abstand der Unterkante der Führungsrollen 12 in der Führungsstellung I zu der Oberkante des kurzen Schenkels 38 der Leitschiene 1. Hierdurch ist gewährleistet, daß das Fahrzeug 2 mit seinen Führungsrollen 12 während des Betriebes z.B. infolge eines Überfahrens von Bodenunebenheiten nicht nach oben aus der Leitschiene 1 herausspringen kann.

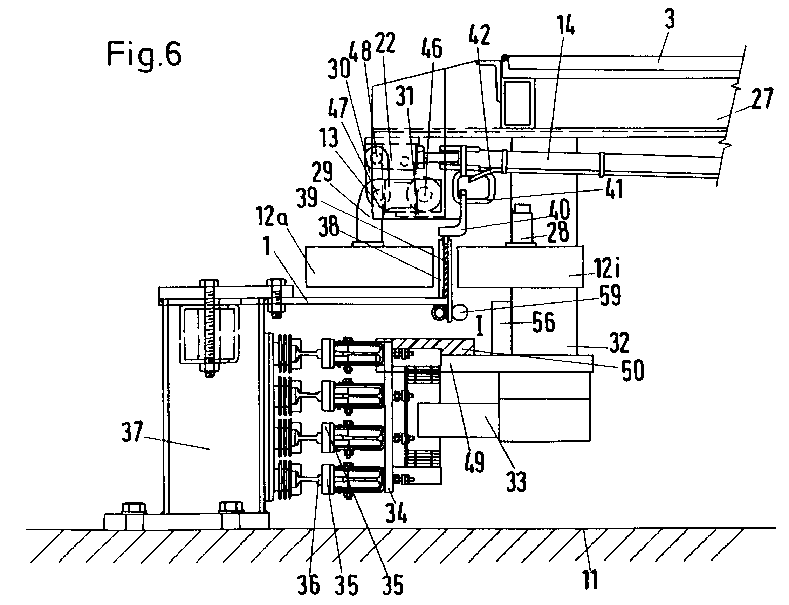

Aus der Figur 6, die eine Ausschnittsvergrößerung von Fig. 5 aus dem Bereich der Leitschiene 1 zeigt, ist entnehmbar, daß die inneren Führungsrollen 12i über eine Achse 28 starr mit der Unterseite des Grundrahmens 27 des Fahrzeuges 2 verbunden und die äußeren Führungsrollen 12a an einem Ende eines Winkelhebels 29 schwenkbar gelagert sind. Der Winkelhebel 29 besteht im wesentlichen aus zwei an einem Ende rechtwinklig zueinander angeordneten Armen an denen die Führungsrolle 12a und an dem anderen Ende der Winkelhebel 29 in einer horizontalen und parallel zur Längsrichtung L verlaufenden Achse 46 gelagert ist. In der Ecke des Winkelhebels 29 ist über einen Bolzen 47 ein Arm 30 angelenkt, der über einen weiteren Bolzen 48 mit einem horizontal geführten Schieber 22 verbunden ist, der wiederum mit dem Gestänge 14 in Verbindung steht. In der Führungsstellung I ist das der Führungsrolle 12a abgewandte Ende des Winkelhebels 29 auf einem horizontal angeordneten Winkelprofil 31 abgestützt, so daß die Achse der äußeren Führungsrolle 12a vertikal ausgerichtet ist. Der Arm 30 ist in dieser Stellung ebenfalls vertikal ausgerichtet und leitet etwaige auf die äußere Führungsrolle 12a von der Leitschiene 1 eingeleitete Kippkräfte über den Arm 30 und den Schieber 22 in den Grundrahmen 27.

Außerdem ist an der Unterseite des Grundrahmens 27 ein rechtwinklig zu diesem ausgerichtetes Tragglied 32 befestigt, an dessen dem Grundrahmen 27 abgewandten Ende eine Schwinge 33 angeordnet ist. Die Schwinge 33 ist vertikal um den Arm 32 schwenkbar und ist an dem dem Arm 32 abgewandten Ende mit einer Grundplatte 34 gelenkig verbunden. Die Grundplatte 34 ist durch eine nicht dargestellte Federeinheit nach außen in Richtung der Schleifleitungen 36 beaufschlagt. Auf der vertikalen Grundplatte 34 sind übereinander vier Stromabnehmer 35 angeordnet, die ebenfalls über Schwingen und Federn in Richtung der Schleifleitung 36 beaufschlagt angeordnet sind. Hierdurch wird in Kurvenfahrten des Fahrzeuges ein optimaler Kontakt der Stromabnehmer 35 mit der Schleifleitung 36 gewährleistet. Die vier übereinander angeordneten Schleifleitungen 36 sind an den Längsseiten von Ständern 37 befestigt. Die Ständer 37 sind in Fahrtrichtung F hintereinander und beabstandet voneinander angeordnet und an ihren unteren Ende an dem Boden 11 befestigt. An dem oberen Ende der Ständer 37 ist die Leitschiene 1 befestigt. Die Leitschiene 1 ist im Profil gesehen L-förmig ausgebildet, wobei der längere Schenkel horizontal verläuft und an seinem freien Ende mit der Oberseite des Ständers 37 verschraubt ist. Der kurze Schenkel 38 der Leitschiene 1, der die Leitfunktion für das Fahrzeug 2 übernimmt, ist nach oben gerichtet und aus zwei Flachprofilen, die mit einem Abstand von etwa 6 mm zueinander angeordnet sind. Der dazwischen gebildete Spalt ist mit Dämpfungsmaterial 39 ausgefüllt. Außerdem können in diesen Spalt Anschlagelemente 40 eingeschoben und anschließend befestigt werden, die in den Raum unterhalb des Grundrahmens 27 des Fahrzeuges 2 und oberhalb der inneren Führungsrolle 12i hineinragen. Diese Anschlagelemente 40 werden in den Bereichen des Förderweges 6 angeordnet, in denen eine Umschaltung der Führungsrollen 12a zwingend erforderlich ist, da sonst das schienengeführte Fahrzeug 2 den Förderweg 6 verlassen würde. Das Umschalten der Führungsrollen 12 erfolgt über ein an dem Fahrzeug 2 angeordnetes Mitnehmerelement 41, das von dem Anschlagelement 40 betätigbar ist. Hierzu ist das Anschlagelement 40 hakenförmig und das Mitnehmerelement 41 ringförmig ausgebildet und die Mitnehmerelemente 41 über ein Zugmittel mit dem Hebel 15 verbunden. Die Mitnehmerelemente 41 sind an dem Gestänge 14 angeordnet, so daß sich diese nur bei in Führungsstellung I befindlichen Führungsrollen 12 in dem Bereich der Anschlagelemente 40 befinden. Nach einer Auslösung der vorbeschriebenen Sicherheitsvorrichtung wird zusätzlich das Fahrzeug abgeschaltet.

In dem Ausführungsbeispiel ist die Erfindung anhand eines Fahrzeuges beschrieben, das als Aufbau eine zur Fahrzeugmitte geneigte Plattform aufweist. Es ist jedoch durchaus möglich, im Rahmen der Erfindung auf dem Fahrzeug eine Personenkabine, einen Gurtförderer, eine Rollenbahn, einen Kippschalenbehälter oder dergleichen anzuordnen.

### Positionsliste

- 1, 1': Leitschiene
- 2: Fahrzeug
- 3: Plattform
- 4: Fördergut
- 5: Übergabestation
- 6: Fahrweg
- 7: Zuführförderer
- 8: Lenkräder
- 9: Tragräder
- 10: Antriebsrad
- 11: Boden
- 12a, i: Führungsrollen
- 13: Spalt
- 14: Gestänge
- 15: Hebel
- 16: Schwenkantrieb
- 17: Lagerböcke
- 18: Schwingenrahmen
- 19: Querträger
- 20: Achse
- 21: Fahrmotor
- 22: Schieber
- 23: Kettenrad
- 24: Antriebskette
- 25: Kettenrad
- 26: Antriebswelle
- 27: Grundrahmen
- 28: Achse
- 29: Winkelrahmen
- 30: Arm
- 31: Winkelprofil
- 32: Tragglied
- 33: Schwinge
- 34: Grundplatte
- 35: Stromabnehmer
- 36: Schleifleitung
- 37: Ständer
- 38: kurzer Schenkel
- 39: Dämpfungsmaterial
- 40: Anschlagelement
- 41: Mitnehmerelement
- 42: Zugmittel
- 43: Längsträger
- 44: Querstrebe
- 45: Drehgelenk
- 46: Achse
- 47: Bolzen
- 48: Bolzen
- 49: Sicherungsblech
- 50: Gleitauflage
- 51: Federelement
- 52: Kettenumlenkräder
- 53: Kette
- 54: Mitnehmer
- 58: Dämpfer
- F: Fahrtrichtung
- L: Längsrichtung
- I: Führungsstellung
- II: Offenstellung

## Patentansprüche

1. Fördersystem mit einem an Leitschienen (1) geführten Flurförderzeug (2), insbesondere fahrerlosen Flurförderzeug mit je einem an beiden Längsseiten des Fahrzeuges (2) angeordneten Paar Führungsrollen (12), das jeweils die den Fahrweg mindestens einseitig seitlich begrenzenden Leitschienen (1) umgreift, mit Abzweigungen im Verlauf des Fahrweges, in denen der Fahrweg beidseitig von den Leitschienen (1) begrenzt ist, mit an dem Fahrzeug (2) angeordneten Umschaltmitteln zum Wechseln des Fahrzeuges innerhalb der Abzweigung, mit einem Schwenkantrieb (16) für die jeweils äußeren Führungsrollen (12a) des Paares Führungsrollen (12) wobei die äußeren Führungsrollen (12a) aus einer Führungsstellung (1), in der die inneren und äußeren Führungsrollen (12a, 12i) die Leitschienen (1) umgreifen, heraus in eine Offenstellung (II), in der die äußere Führungsrolle (12a) die Leitschienen (1) freigibt, an dem Fahrzeug (2) schwenkbar gelagert sind,
dadurch gekennzeichnet,
daß das Fahrzeug (2) in Fahrtrichtung (F) gesehen vorne zwei Lenkräder (8) und hinten zwei Tragräder (9) aufweist und daß die Führungsrollen (12a, 12i) zwischen den Lenk- und Tragrädern (8, 9) sowie zu den Lenkrädern (8) hin versetzt an der Längsseite des Fahrzeuges (2) angeordnet sind.

2. Fördersystem nach Anspruch 1,
dadurch gekennzeichnet,
daß die äußeren Führungsrollen (12a) über ein Gestänge (14) derart miteinander verbunden sind, daß entweder die äußere Führungsrolle (12a) der einen Längsseite des Fahrzeuges (2) in Offenstellung (I) und die äußere Führungsrolle (12a) der anderen Längsseite des Fahrzeuges (2) in Führungsstellung (II) oder umgekehrt angeordnet sind.

3. Fördersystem nach Anspruch 1 oder 2,
dadurch gekennzeichnet,
daß die jeweils an den äußeren Führungsrollen (12a) angelenkten Gestänge (14) ihrerseits an einem gemeinsamen Hebel (15) angelenkt sind und der an dem Fahrzeug (2) schwenkbar gelagerte Hebel (15) von einem Federelement (51) beaufschlagt durch den Schwenkantrieb (16) in zwei Endstellungen, die jeweils der Führungsstellung (I) bzw. der Offenstellung (II) der äußeren Führungsrollen (12a) entsprechen, bewegbar ist.

4. Fördersystem nach einem oder mehreren der Ansprüche 1 bis 3,
dadurch gekennzeichnet,
daß der Hebel (15) an seinem freien Ende eine Ausnehmung für einen Mitnehmer (54) aufweist und der Mitnehmer (54) an einer umlaufenden Kette (53) angeordnet ist, die von dem Schwenkantrieb (16) zur Umstellung der äußeren Führungsrollen (12a) von der Führungsstellung (I) in die Offenstellung (II) antreibbar ist.

5. Fördersystem nach einem oder mehreren der Ansprüche 1 bis 4,
dadurch gekennzeichnet,
daß außerhalb der Abzweigungen das Fahrzeug (2) ausschließlich an einer Leitschiene (1) geführt ist.

6. Fördersystem nach Anspruch 5,
dadurch gekennzeichnet,
daß zwischen den Tragrädern (9) ein Antriebsrad (10) angeordnet ist, das Antriebsrad (10) schwenkbar an dem Fahrzeug (2) gelagert ist und in Richtung des Fahrwegs (6) beaufschlagt ist.

7. Fördersystem nach Anspruch 5 oder 6,
dadurch gekennzeichnet,
daß der Abstand der Tragräder (9) zueinander geringer ist als der Abstand zwischen den Lenkrädern (8).

8. Fördersystem nach einem oder mehreren der Ansprüche 1 bis 7,
dadurch gekennzeichnet,
daß die Leitschiene (1) L-förmig ausgebildet ist und bei horizontalem Fahrweg (6) gesehen ein Schenkel der Leitschiene (1) horizontal ausgerichtet und über Ständer (37) neben dem Fahrweg (6) befestigt sind.

9. Fördersystem nach Anspruch 8,
dadurch gekennzeichnet,
daß unterhalb der Leitschiene (1) an den Ständern (37) Schleifleitungen (36) für die Stromversorgung der Fahrzeuge (2) angeordnet sind.

10. Fördersystem nach Anspruch 9 oder 10,
dadurch gekennzeichnet,
daß der andere Schenkel (38) der Leitschiene (1) bei horizontalem Fahrweg (6) gesehen vertikal nach oben gerichtet ist und an dem Fahrzeug ein Sicherungsblech (49) angeordnet ist, das in den Raum zwischen der Leitschiene (1) und dem Fahrweg (6) hineinragt und dessen Abstand von dem horizontalen Schenkel der Leitschiene (1) geringer ist als die Höhe des vertikalen Schenkels (18) der Leitschiene (1).

11. Fördersystem nach einem oder mehreren der Ansprüche 1 bis 10,
dadurch gekennzeichnet,
daß im Bereich von Enden der Leitschiene (1) Anschlagelemente (40) derart angeordnet sind, daß beim Überfahren der Anschlagelemente (40) mit einer äußeren Führungsrolle (12a) in Führungsstellung (I) über ein an dem Fahrzeug angeordnetes und von dem Anschlagelement (40) betätigbares Mitnehmerelement (41) eine Umschaltung der äußeren Führungsrolle (12a) in die Offenstellung (II) bewirkt.

12. Fördersystem nach Anspruch 11,
dadurch gekennzeichnet,
daß das Anschlagelement (40) als Haken ausgebildet ist und das Mitnehmerelement (41) als Ring ausgebildet ist und der Ring über ein Zugmittel (42) mit dem Hebel (15) verbunden ist.

## Claims

1. Conveyor system with a floor conveying-implement (1) guided on guide rails (1), particularly a driverless floor conveying-implement with a pair of guide rollers disposed one on either longitudinal side of a vehicle concerned (2), which surrounds, at any given moment, laterally bordering guide-rails (1) on at least one side of a course concerned, with branches in a route concerned in which a said course is bordered on both sides by guide-rails (1), with switching means for changing a vehicle within a branch, and with a swivel-actuator (16) for respective outer guide rollers (12a) of a pair of guide rollers (12) whereby outer guide rollers (12a) are supported such that they can be swivelled from a guide position (I), in which inner and outer guide-rollers (12a, 12i) surround guide-rails (1), into an open position (II) in which an outer guide roller (12a) releases guide-rails (1),
characterized in that
a vehicle (2), as seen in a direction of movement (F), has two guide-wheels (8) in front and two support wheels (9) behind and guide-rollers (12a, 12i) are disposed shifted on a lengthwise side of a said vehicle (2) between guide and support wheels (8, 9) and towards said guide wheels (8).

2. Conveyor system in accordance with claim 1,
characterized in that
outer guide-rollers (12a) are connected to each other by a bar (14) such that either an outer guide rollers (12a) of one lengthwise side of a vehicle (2) is disposed in an open position (II) and a guide-roller (12a) of a second lengthwise side of a said vehicle (2) is disposed in a guide-position (I), or vice-versa.

3. Conveyor system in accordance with claim 1 or claim 2,
characterized in that
a bar (14) articulated on each outer guide-roller (12a) are themselves articulated on a common lever (15) and a said lever (15), which is supported such that it can pivot on a vehicle (2), has a spring member (51) applied to it, by means of a swivel actuator (16), in two final positions which correspond to a guide position (12a) and an open position (II) of outer guide-rollers (12a).

4. Conveyor system in accordance with any one or several of claims 1 to 3,
characterized in that
a lever (15) has a recess on its free end for a carrier means (54) and a said carrier means (54) is disposed on a revolving chain (53) which can be actuated by a swivel actuator (16) for moving outer guide-rollers (12a) from a guide-position (I) into an open position (II).

5. Conveyor system in accordance with any one or several or claims 1 to 4,
characterized in that
outside of branches, a vehicle (2) is exclusively guided on a guide-rail (1).

6. Conveyor system in accordance with claim 5,
characterized in that
a pinion (10) is disposed between support wheels (9), a said pinion being supported on a vehicle (2) and being applied in a direction of movement (6).

7. Conveyor system in accordance with claim 6 or 7,
characterized in that
a distance of separation between support wheels (9) is less than a distance of separation between guide wheels (8).

8. Conveyor system in accordance with any one or several of claims 1 to 7,
characterized in that
a guide-rail (1) is developed L-shaped and, as seen for a horizontal course (6), an arm piece of a said guide-rail (1) is horizontally aligned and is fixed alongside a course of movement (6) by means of support members (37).

9. Conveyor system in accordance with claim 8,
characterized in that
current collector lines (36) for electric-current supply to a vehicle (2) are disposed underneath a guide-rail (1, on support members (37).

10. Conveyor system in accordance with claim 8 or 9,
characterized in that
a second arm-piece (38) of a guide-rail (1), as seen for a horizontal course of movement (6), is vertically aligned, and a safety-plate (49) is disposed on a vehicle concerned, a said safety-plate projecting into a space between a guide-rail (1) and a course of movement (6), and in that a distance of separation of a said safety-plate (49) from a horizontal arm-piece of a guide-rail (1) is less than a height of a vertical arm-piece (38) of a guide-rail (1).

11. Conveyor system in accordance with any one or several of claims 1 to 10,
characterized in that
attachment elements (40) are disposed in an area of ends of a guide-rail (1), said attachment elements producing changeover from a guide position (I), into an open position (II), of a guide-roller (12a), when said attachment elements are moved over by an outer guide-roller (12a) in a said guide-position (I), this changeover being produced by means of a carrier member (41), disposed on a vehicle concerned, which is operated by an attachment element (40) concerned.

12. Conveyor system in accordance with claim 11,
characterized in that
an attachment element (4)) is developed as a hook and a carrier member (41) is developed as a ring and a ring concerned is connected to a said lever (15) via a pulling means (42).

## Revendications

1. Système de transport, comportant un chariot de manutention (2) guidé sur des rails de guidage (1), en particulier un chariot de manutention sans conducteur, ayant, à chaque fois, une paire de rouleaux de guidage (12) agencés sur les deux côtés longitudinaux du véhicule (2), qui, à chaque fois, enveloppent les rails de guidage (1) limitant latéralement la voie de déplacement au moins d'un côté, avec des embranchements dans le cours de la voie de déplacement, dans lesquels la voie de déplacement est limitée des deux côtés par les rails de guidage (1), des moyens de commutation agencés sur le véhicule (2) pour aiguiller le véhicule à l'intérieur de l'embranchement, un entraînement pivotant (16) pour les rouleaux de guidage à chaque fois externes (12a) de la paire de rouleaux de guidage (12), les rouleaux de guidage externes (12a) étant montés pivotants sur le véhicule (2) d'une position de guidage (I), dans laquelle les rouleaux de guidage internes et externes (12a,12i) enveloppent les rails de guidage (1), dans une position ouverte (II), dans laquelle les rouleaux de guidage externes (12a) libèrent les rails de guidage (1),
caractérisé en ce que le véhicule (2) présente, dans le sens de déplacement (F), à l'avant, deux roues directrices (8) et, à l'arrière, deux roues porteuses (9), et en ce que les rouleaux de guidage (12a,12i) sont agencés entre les roues directrices et les roues porteuses (8,9) ainsi que de façon décalée par rapport aux roues directrices (8) sur le côté longitudinal du véhicule (2).

2. Système de transport selon la revendication 1,
caractérisé en ce que les rouleaux de guidage externes (12a) sont reliés ensemble par l'intermédiaire d'une tringlerie (14), en ce que le rouleau de guidage externe (12a) d'un coté longitudinal du véhicule (2) est agencé en position ouverte (II) et le rouleau de guidage externe (12a) de l'autre côté longitudinal du véhicule (2) est agencé en position de guidage (I), ou inversement.

3. Système de transport selon la revendication 1 ou 2,
caractérisé en ce que les tringleries (14) articulées à chaque fois aux rouleaux de guidage externes (12a) sont articulées, de leur côté, à un levier commun (15) et le levier (15) monté pivotant sur le véhicule (2), sollicité par un élément élastique (51), peut être déplacé par l'entraînement pivotant (16) dans deux positions d'extrémité qui correspondent, à chaque fois, à la position de guidage (I) ou à la position ouverte (II) des rouleaux de guidage externes (12a).

4. Système de transport selon une ou plusieurs des revendications 1 à 3,
caractérisé en ce que le levier (15), à son extrémité libre, présente un évidement pour un entraîneur (54), et l'entraîneur (54) est agencé sur une chaîne tournante (53), qui peut être entraînée par l'entraînement pivotant (16) pour faire passer les rouleaux de guidage externes (12a) de la position de guidage (I) dans la position ouverte (II).

5. Système de transport selon une ou plusieurs des revendications 1 à 4,
caractérisé en ce que, à l'extérieur des embranchements, le véhicule (2) est guidé exclusivement sur un rail de guidage (1).

6. Système de transport selon la revendication 5,
caractérisé en ce que, entre les roues porteuses (9), il est agencé une roue d'entraînement (10), la roue d'entraînement (10) étant montée de façon pivotante sur le véhicule (2) et étant sollicitée en direction de la voie de déplacement (6).

7. Système de transport selon la revendication 5 ou 6,
caractérisé en ce que l'écartement des roues porteuses (9) l'une par rapport à l'autre est plus faible que l'écartement entre les roues directrices (8).

8. Système de transport selon une ou plusieurs des revendications 1 à 7,
caractérisé en ce que le rail de guidage (1) est réalisé en forme de L et, pour une voie de déplacement (6) horizontale, une aile du rail de guidage (1) est orientée horizontalement et est fixée par des supports (37) à côté de la voie de déplacement (6).

9. Système de transport selon la revendication 8,
caractérisé en ce que des lignes de contact (36) pour l'alimentation en courant des véhicules (2) sont agencées au-dessous du rail de guidage (1) sur les supports (37).

10. Système de transport selon la revendication 8 ou 9,
caractérisé en ce que l'autre aile (38) du rail de guidage (1), pour une voie de déplacement horizontale (6), est orientée verticalement vers le haut et, sur le véhicule, il est agencé une tôle de sécurité (49) qui pénètre dans l'espace entre le rail de guidage (1) et la voie de déplacement (6) et dont l'écartement de l'aile horizontale du rail de guidage (1) est plus faible que la hauteur de l'aile verticale (38) du rail de guidage (1).

11. Système de transport selon une ou plusieurs des revendications 1 à 10,
caractérisé en ce que, dans la zone des extrémités du rail de guidage (1), sont agencés des éléments de butée (40) de sorte que, lorsque les éléments de butée (40) sont dépassés par un rouleau de guidage externe (12a) dans la position de guidage (I), il se produit un passage du rouleau de guidage externe (12a) dans la position ouverte (II) par l'intermédiaire d'un élément d'entraînement (41) agencé sur le véhicule et pouvant être actionné par l'élément de butée (40).

12. Système de transport selon la revendication 11,
caractérisé en ce que l'élément de butée (40) est réalisé sous forme de crochet et l'élément d'entraînement (41) est réalisé sous forme de bague, et la bague est reliée au levier (15) par l'intermédiaire d'un moyen de traction (42).
